# NOUVEAU FASCICULE DE BREVET EUROPEEN

(11) **EP 0 333 533 B2**
(45) Date de publication et mention de la décision concernant l'opposition: **26.04.2000**
(45) Mention de la délivrance du brevet: 07.04.1993
(21) Numéro de dépôt: 89400480.3
(22) Date de dépôt: 21.02.1989
(51) Int. Cl.: H04N 3/15, H04N 5/32

(54) **Dispositif photosensible et détecteur d'images comportant un tel dispositif, notamment détecteur d'images à double énergie.**
Photoempfindliche Einrichtung und Bildsensor mit einer solchen Einrichtung, insbesondere Doppel-Energie-Bildsensor
Photosensitive device and image sensor with such a device, especially a double energy image sensor

(30) Priorité: 26.02.1988 FR 8802366
(43) Date de publication de la demande: 20.09.1989
(73) Titulaire: THOMSON-CSF, 75008 Paris (FR)
(72) Inventeur: Berger, Jean-Luc THOMSON-CSF SCPI, Cédex 67-92045 Paris la Défense (FR); Arques, Marc THOMSON-CSF SCPI, Cédex 67-92045 Paris la Défense (FR)
(74) Mandataire: Guérin, Michel

(56) Documents cités:
- EP-A- 0 223 545
- FR-A- 2 593 343
- US-A- 4 581 625

## Description

L'invention se rapporte à l'élaboration d'images au moyen d'éléments photosensibles, et concerne plus particulièrement un arrangement matriciel d'éléments photosensibles permettant l'acquisition simultanée de plusieurs images. L'invention concerne également un détecteur de radiations utilisant un tel arrangement d'éléments photosensibles, notamment un détecteur de rayons X permettant d'élaborer simultanément deux images correspondant chacune à un spectre en énergie différent du rayonnement X.

En prenant pour exemple le domaine de la radiologie et du radiodiagnostic, il est intéressant de réaliser lors de l'examen d'un patient, deux clichés correspondant chacun à une énergie différente du rayonnement X, de manière à obtenir les renseignements spécifiques de certains corps, par différentiation des clichés. Les images de ce type ou images bi-énergie, réalisées actuellement par les radiologues, sont obtenues à partir de deux images d'une même zone du patient formées successivement, soit en modifiant d'une image à l'autre les conditions du rayonnement X (spectre en énergie du rayonnement X différent) ; soit en utilisant des capteurs sensibles à des fenêtres énergétiques différentes du rayonnement X : ceci étant obtenu par exemple en changeant le type de scintillateur servant à convertir les rayons X en une lumière visible qui impressionne un film photographique (le scintillateur est formé d'une substance qui a la propriété d'être excitée par des rayons X et d'émettre, en réponse à cette excitation, un rayonnement de longueur d'onde visible ou proche du visible; le scintillateur a un rendement de conversion maximum, ou sensibilité maximale, dans une certaine gamme d'énergie du rayonnement X, cette gamme d'énergie étant déterminée par la nature de la substance qui constitue le scintillateur).

Ces méthodes de l'art antérieur présentent l'inconvénient d'exiger des mouvements mécaniques, notamment du film ou du capteur pour la prise de deux clichés successifs. Un autre inconvénient important réside dans le fait que ces images, obtenues successivement, ne permettent pas de s'affranchir des mouvements du patient, d'où il résulte une médiocre superposabilité des deux clichés et par suite une médiocre résolution spatiale.

Un des buts de l'invention est de permettre l'élaboration simultanée de deux images, à l'aide d'un dispositif capteur photosensible de type surfacique et donc ne nécéssitant pas de mouvement mécanique pendant la prise d'images, et permettant d'obtenir des images parfaitement superposables. Un tel dispositif photosensible est particulièrement bien adapté à une utilisation en radiologie, pour l'élaboration de deux images dites bi-énergie, correspondant chacune à un spectre en énergie différent du rayonnement X, à partir par exemple d'une seule irradiation X d'un objet ou patient.

Il est connu de réaliser des matrices d'éléments photosensibles de grande capacité, plusieurs millions de points par exemple. De manière classique, ces matrices photosensibles comportent un réseau de conducteurs en lignes et un réseau de conducteurs en colonnes. A chaque croisement d'un conducteur ligne et d'un conducteur colonne, est disposée une zone ou point photosensible, ces points photosensibles étant ainsi organisés également en lignes et en colonnes. Le nombre de points photosensibles dans une surface donnée détermine la résolution d'une image. Chaque point photosensible est connecté entre un conducteur ligne et un conducteur colonne : en fait, à chaque conducteur ligne sont connectés autant de points photosensibles qu'il y a de colonnes de ces derniers, et à chaque conducteur en colonnes sont connectés autant de points photosensibles qu'il y a de lignes de ces derniers.

Le nombre de points photosensibles dans une surface donnée détermine la résolution de l'image. Pour réduire l'encombrement d'un point photosensible, de sorte à augmenter la résolution en logeant un plus grand nombre de points photosensibles dans une surface donnée, on a proposé des matrices d'éléments photosensibles où chaque point photosensible est constitué par une photodiode en série avec une capacité. Le brevet français FR-A-2 593 319 décrit un procédé de lecture, et décrit le fonctionnement détaillé d'une matrice photosensible dont chaque point photosensible est constitué par une photodiode en série avec une capacité, comme ci-dessus mentionné. Un autre brevet français, FR-A-2 593 343 se rapporte à une matrice ayant un réseau de points photosensibles constitués chacun par une photodiode et une capacité en série, comme ci-dessus mentionné, et ce brevet décrit un procédé de fabrication d'une telle matrice photosensible, ainsi qu'un procédé de lecture de cette matrice et une application de cette matrice à la prise de vue d'images notamment radiologiques. Un des avantages du type de structure décrite dans ce brevet, est de permettre la réalisation de matrices de grande dimension et donc applicable de manière avantageuse à la radiologie, du fait que les dépôts en couches minces de silicium amorphe par exemple, sont maintenant bien maîtrisés. Dans ce brevet, la structure présentée comporte un scintillateur qui est soumis à un rayonnement X. En réponse à ce rayonnement X, le scintillateur émet un second rayonnement auquel sont sensibles les photodiodes.

Pour obtenir des images bi-énergie à l'aide d'une matrice d'éléments photosensibles telle que décrite dans le brevet français FR-A-2593343 ci-dessus cité, il suffit d'ajouter un second scintillateur de sorte à avoir une structure avec deux scintillateurs : chaque scintillateur ayant une sensibilité optimale pour des rayons X d'énergie différente. Il est nécessaire en outre d'introduire dans cette structure deux niveaux supplémentaires en damiers "opaque-transparent", disposés entre les scintillateurs et les photodiodes, de façon que certains points photosensibles ne soient exposés qu'à la lumière provenant du scintillateur qui leur est affecté, et que les autres points photosensibles ne soient exposés qu'à la lumière provenant de l'autre scintillateur.

Cette solution, relativement simple à réaliser technologiquement, présente cependant l'inconvénient de fournir deux images bi-énergie qui ont séparément une résolution et un facteur de remplissage moitié par rapport aux images mono-énergie, du fait que sur deux points photosensibles adjacents, l'un est concerné par la première image et l'autre par la seconde.

Un brevet des Etats-Unis US-A-4 581 625 décrit un autre type de matrice photosensible sensible à deux longueurs d'onde ou énergies différentes, avec une résolution équivalente à celle d'une matrice mono-énergie. Dans cette matrice, chaque point photosensible comprend deux capteurs photosensibles indépendants, juxtaposés, destinés à détecter des rayonnements de couleurs différentes.

un des buts de l'invention est de permettre la réalisation de détecteurs d'images notamment radiologiques, utilisant d'une part une matrice photosensible du type à deux capteurs juxtaposés par point photosensible, et d'autre part deux éléments de conversion de longueur d'onde du rayonnement incident, afin d'obtenir simultanément deux images correspondant chacune à une énergie différente du rayonnement incident et présentant chacune une résolution et un facteur de remplissage équivalent aux images d'un dispositif mono-énergie.

Selon l'invention, on propose un détecteur d'images tel que défini dans la revendication 1.

L'invention sera mieux comprise et d'autres caractéristiques et résultats de l'invention ressortiront de la description suivante, donnée à titre d'exemple non limitatif et illustrée par les trois figures annexées, parmi lesquelles :
- La figure 1 est un schéma montrant, à titre d'exemple non limitatif, un dispositif photosensible conforme à l'invention ;
- la figure 2 est un schéma montrant une seconde version du dispositif photosensible de l'invention ;
- les figures 3a et 3b, sont des coupes latérales, selon deux directions orthogonales, d'un détecteur d'images radiologiques utilisant le dispositif photosensible montré à la figure 1.

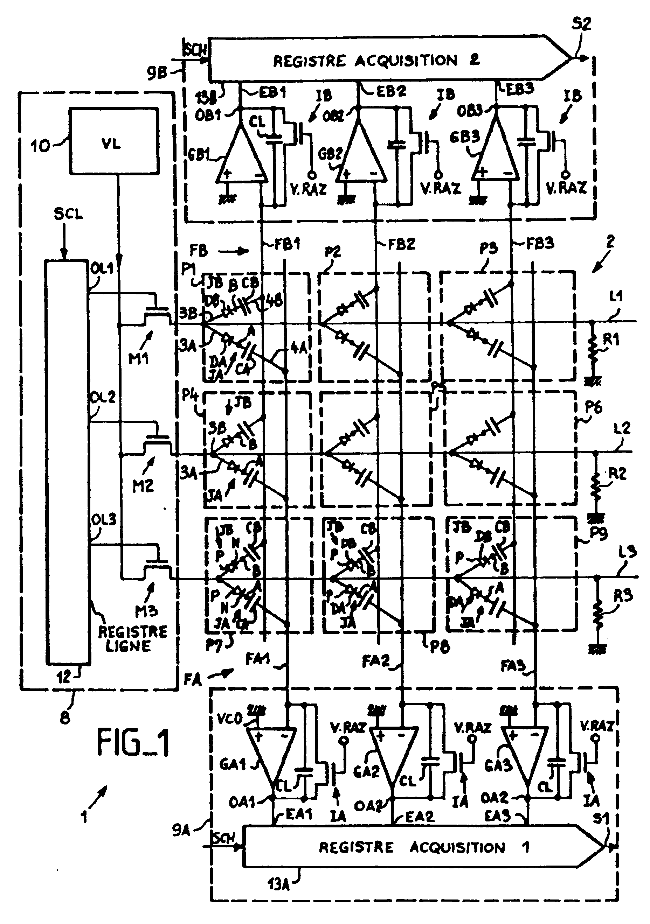

La figure 1 montre le schéma électrique d'un dispositif photosensible 1 conforme à l'invention. Le dispositif photosensible comprend une pluralité de points photosensibles P1, P2, ...,P9 qui sont disposés en lignes et en colonnes d'une manière en elle-même classique, en vue de constituer une matrice photosensible 2. Dans l'exemple non limitatif décrit, le nombre de points photosensibles P1 à P9 est limité à 9 selon un assemblage matriciel 3x3 pour simplifier la figure 1, mais dans l'esprit de l'invention cet assemblage matriciel peut avoir une capacité beaucoup plus grande.

Selon une caractéristique de l'invention, chaque point photosensible P1 à P9 est constitué par deux cellules photosensibles JA, JB. Chaque cellule photosensible JA, JB comporte un élément photosensible DA, DB monté en série avec une capacité CA, CB.

Selon une autre caractéristique de l'invention, au moins les deux éléments photosensibles DA, DB d'un même point photosensible de P1 à P9 sont superposés, comme il est davantage expliqué dans une suite de la description relative à une réalisation dans laquelle les éléments photosensibles DA, DB et les capacités CA, CB sont constitués par des couches qui sont toutes superposées.

Le dispositif photosensible 1 comporte en outre des conducteurs en lignes L1 à L3 et, selon une autre caractéristique de l'invention, il comporte deux réseaux FA, FB de conducteurs en colonnes FA1 à FA3 et FB1 à FB3. Les conducteurs lignes L1 à L3 sont reliés à un dispositif d'adressage 8, et les premier et second réseaux FA, FB de conducteurs colonnes sont reliés respectivement à un premier et un second dispositif de lecture et de multiplexage 9A, 9B. Les cellules photosensibles JA, JB ont une première extrémité 3A, 3B et une seconde extrémité 4A, 4B par lesquelles ces cellules photosensibles sont connectées aux conducteurs lignes L1 à L3 et aux conducteurs colonnes FA1 à FA3 et FB1 à FB3. Pour un même point photosensible, les deux cellules photosensibles JA, JB sont connectées par une extrémité à un même conducteur ligne, et sont connectées par l'autre extrémité à des conducteurs de colonnes d'un réseau différent. Ainsi par exemple le premier point photosensible P1 comporte une première et une seconde cellules JA, JB, dont les premières extrémités 3A, 3B sont réunies à la même première ligne L1. La seconde extrémité 4A de la première cellule photosensible JA est réunie à un conducteur colonne FA1 du premier réseau FA, et la deuxième extrémité 4B de la deuxième cellule photosensible JB est reliée à un conducteur colonne FB1 appartenant au second réseau FB. Les premières et secondes cellules photosensibles JA, JB des autres points photosensibles P2 à P9 sont reliées d'une manière semblable aux conducteurs lignes L1 à L3 et aux conducteurs colonnes FA1 à FA3 et FB1 à FB3, à l'intersection desquels en pratique est situé le point photosensible constitué par les deux cellules photosensibles JA, JB superposées.

Il est ainsi possible avec chacun des points photosensibles P1 à P9, d'obtenir simultanément ou non deux informations différentes, de sorte par exemple à réaliser deux images radiologiques correspondant chacune à une énergie différente du rayonnement X. Ceci peut être obtenu en convertissant le rayonnement X en lumière visible et en exposant chaque élément photosensible DA, DB à la lumière ayant l'origine désirée, d'où il résulte pour chaque point photosensible P1 à P9:
- que d'une part, dans une zone A située à la jonction du premier élément photosensible DA et de la capacité CA, il est possible de stocker une première information sous la forme d'une quantité de charge proportionnelle à l'éclairement du premier élément photosensible DA ; et qu'il est possible d'autre part, dans une seconde zone B formée à la jonction entre le second élément photosensible DB et la capacité CB, de stocker une seconde information sous la forme d'une seconde quantité de charge proportionnelle à l'éclairement du second élément photosensible de DB.

Dans l'exemple non limitatif de la description, les éléments photosensibles DA, DB sont des photodiodes. Chaque photodiode est en série avec une capacité CA, CB pour constituer une cellule photosensible identique aux cellules photosensibles déjà décrites dans les demandes de brevets français FR-A-2593319 et FR-A-2593343, précédemment citées, et qui décrivent en détail le fonctionnement de telles cellules photosensibles ainsi que le fonctionnement de moyens utiles à obtenir le stockage et la lecture des charges ou informations ; par suite ces deux demandes de brevets (FR-A-2593319 et FR-A-2593343) doivent être considérées comme faisant partie de la présente description.

On rappelle néanmoins que pour chaque cellule photosensible JA ou JB, les phases principales du fonctionnement sont les suivantes :
- 1) phase de polarisation en inverse de la photodiode ;
- 2) phase d'éclairement de la photodiode (par suite par exemple d'un flash de rayonnement X pour l'irradiation d'un patient, et conversion du rayonnement X en un rayonnement de longueur d'onde visible ou proche du visible) ; stockage de l'information correspondant à l'éclairement ;
- 3) phase de lecture (polarisation en directe de la photodiode ;
- 4) phase de remise à niveau des tensions aux bornes de la photodiode, obtenue soit à l'aide d'une impulsion électrique de polarisation appliquée au conducteur ligne, soit au moyen d'un éclairement uniforme calibré, soit au moyen d'un flash lumineux intense.

Avec la présente invention, bien que chaque point photosensible P1 à P9 comporte deux cellules photosensibles JA, JB et offre par suite deux informations, les opérations ci-dessus mentionnées peuvent être obtenues d'une manière semblable dans son principe, à celles décrites dans les deux demandes de brevets ci-dessus citées.

Dans l'exemple non limitatif décrit, le dispositif d'adressage ligne comporte un générateur d'impulsions 10 produisant une tension pulsée VL destinée à être appliquée aux conducteurs de lignes L1 à L3. A cette fin, le générateur d'impulsions 3 est relié aux conducteurs lignes L1 à L3 par l'intermédiaire de transistors MOS M1, M2, M3, formant des interrupteurs de ligne commandés par des sorties OL1, OL2, OL3 d'un registre à décalage ou registre ligne 12. Le registre ligne 12 est commandé par un signal de commande SCL de décalage ligne. Ainsi de manière classique, lorsqu'une ligne de points photosensibles P1 à P3, ou P4 à P6 ou P7 à P9 est sélectionnée, le conducteur ligne L1 à L3 correspondant est relié au générateur d'impulsion 10, de sorte que la tension pulsée VL est appliquée à tous les points photosensibles reliés à ce conducteur ligne. Il est à noter, que pour maintenir les lignes L1 à L3 à un potentiel fixe, quand les interrupteurs de ligne M1, M2, M3 sont ouverts (non passants), chaque conducteur ligne L1, L2, L3 est relié à la masse par une résistance R1 à R3 ; ces résistances R1 à R3 ayant une valeur élevée par rapport à la résistance présentée par les interrupteurs M1 à M3 quand ces derniers sont fermés (état passant).

D'autre part, les moyens de lecture et de multiplexage 9A, 9B comportent des amplificateurs de lecture qui sont des amplificateurs-intégrateurs GA1 à GA3 et GB1 à GB3, auquels sont reliés les conducteurs en colonne :
- chaque conducteur colonne FA1 à FA3 du premier réseau FA est relié à l'entrée négative "-" d'un amplificateur opérationnel GA1 à GA3 ; chacun de ces amplificateurs est monté en intégrateur à l'aide d'un condensateur d'intégration CL monté entre l'entrée négative "-" de l'amplificateur GA1 à GA3 et la sortie OA1 à OA3 de cet amplificateur. La seconde entrée ou entrée positive "+" de chaque amplificateur GA1 à GA3 est reliée à un potentiel de référence colonne VCO qui peut être la masse par exemple. Chaque amplificateur-intégrateur GA1 à GA3 comporte en outre un interrupteur IA appelé interrupteur de remise à zéro, monté en parallèle avec le condensateur d'intégration CL ; les interrupteurs de remise à zéro IA étant constitués par des transistors MOS commandés par des signaux de remise à zéro V.RAZ. L'interrupteur de remise à zéro IA d'un amplificateur-intégrateur GA1 à GA3 donné, est maintenu "fermé" ou "passant" de manière à court-circuiter le condensateur d'intégration CL, sauf pendant la séquence de lecture de la cellule photosensible qui est reliée à cet amplificateur. Les sorties OA1, OA2, OA3 des amplificateurs GA1, GA2, GA3 sont reliés à un premier dispositif d'acquisition de données analogiques 13A, constitué par exemple par un registre à décalage à entrées parallèles EA1, EA2, EA3 et sortie S1 série, du type CCD par exemple.

Les conducteurs colonnes FB1 à FB3 du second réseau FB sont reliés d'une manière semblable à des amplificateurs intégrateurs GB1, GB2, GB3. D'une même manière que dans le cas des conducteurs colonnes du premier réseau FA, ces amplificateurs-intégrateurs GB1 à GB3 comportent chacun un condensateur d'intégration CL et un interrupteur de remise à zéro IB qui sont montés en parallèle entre l'entrée négative "-" et la sortie OB1 à OB3 de ces amplificateurs-intégrateurs GB1 à GB3. Les sorties OB1 à OB3 de ces amplificateurs-intégrateurs sont reliées respectivement aux entrées EB1, EB2, EB3 d'un second registre d'acquisition 13 B, constitué également par un registre à décalage du type à entrée parallèle et sortie S2 série.

Par rapport aux matrices photosensibles décrites dans les demandes de brevets français FR-A-2593319 et FR-A-2593343 déjà mentionnées, l'arrangement matriciel de l'invention diffère en ce que chaque point photosensible P1 à P9 peut stocker deux informations différentes, l'une au point A et l'autre au point B des cellules photosensibles JA, JB, de sorte à permettre l'acquisition simultanée des informations relatives à deux images.

Du fait que d'une part, pour un même point photosensible P1 à P9, les deux cellules photosensibles JA, JB sont reliées à un même conducteur en ligne, et que d'autre part les premières cellules photosensibles A sont reliées à des conducteurs colonnes FA1 à FA3 différents des conducteurs colonnes FB1 à FB3 auxquels sont reliées les secondes cellules photosensibles JB, le fonctionnement au niveau de l'une quelconque de ces cellules photosensibles JA ou JB, chacune constituée d'un élément photosensible et d'une capacité en série, reste fondamentalement le même que celui qui est expliqué dans les deux demandes de brevets ci-dessus mentionnées ; la différence étant qu'au lieu d'avoir uniquement des signaux de sortie relatifs aux informations stockées aux différents premiers points A en sortie S1 du premier registre d'acquisition 13A par exemple, on peut avoir en outre, simultanément ou non, en sortie S2 du second registre d'acquisition 13B, des signaux relatifs aux informations stockées aux différents seconds points B.

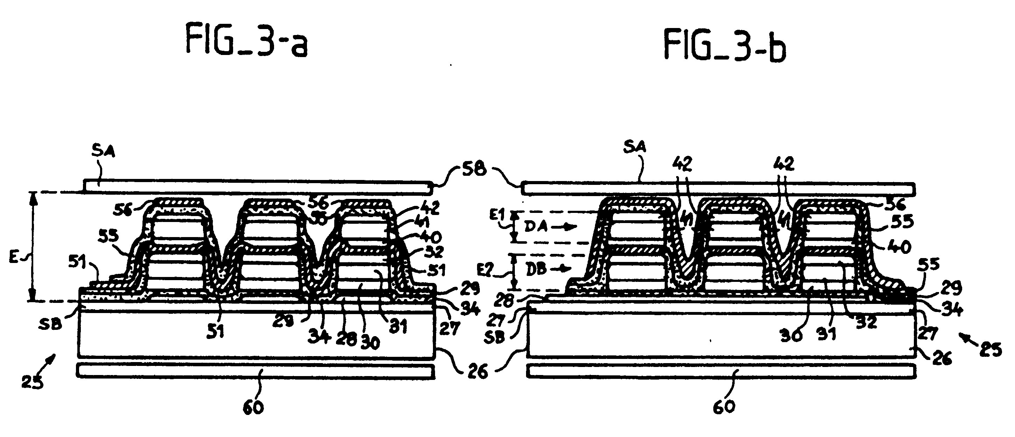

Ainsi par exemple le fonctionnement global du dispositif photosensible 1 dont le schéma est représenté à la figure 1, peut se résumer aux phases suivantes :
1) phase de polarisation en inverse : le générateur d'impulsions 10 envoie sur tous les conducteurs lignes L1 à L3, simultanément ou avec un décalage, une impulsion qui a pour effet de polariser en inverse les photodiodes DA, DB ;
2) ensuite, phase d'éclairement de tous les points sensibles de P1 à P9 par le signal utile : le signal utile provenant d'un flash de rayonnement X qui, par suite d'une conversion en longueur d'onde à l'aide de deux scintillateurs (montrés à la figure 3), détermine l'éclairement de tous les points photosensibles P1 à P9, et pour chacun de ces points photosensibles le stockage d'une information aux points A et B ;
3) phase de lecture du point A et du point B des points photosensibles reliés à un même conducteur ligne, et qui peut être simultanée pour les points A et B : toutes les informations stockées aux points A d'une part, et toutes les informations stockées aux points B d'autre part, pour les cellules photosensibles JA, JB reliées à un même conducteur lignes L1 à L3, sont transférées respectivement dans le premier et le second registre d'acquisition 13A, 13B ; ces registres 13A, 13B sont ensuite vidés sous la commande d'un signal de décalage SCH appliqué à chacun des registres d'acquisition 13A, 13B, de sorte que les informations sont ensuite transférées dans une mémoire principale (non représentée) classique ;
4) la phase 3 ci-dessus est répétée lignes après lignes pour tous les conducteurs lignes L1 à L3 : on obtient ainsi les deux images recherchées ;
5) il est ensuite effectuée une remise à niveau générale commune à tous les points photosensibles P1 à P9.

Dans l'exemple non limitatif décrit et représenté à la figure 1, toutes les cellules photosensibles JA, JB sont disposées d'une même manière par rapport au conducteur ligne L1 à L3 auquel elles sont reliées. Mais il doit être entendu que dans l'esprit de l'invention, l'une ou l'autre de ces deux cellules photosensibles JA, JB, ou les deux, peuvent être agencées de manière différente à celles représentées par la figure 1, où les photodiodes DA, DB sont reliées à un conducteur en ligne L1 à L3 par leur anode P, les capacités CA, CB étant reliées au conducteur en colonne FA1 à FA3 et FB1 à FB3 :
- ainsi par exemple, dans une cellule photosensible JA, JB, les positions d'une photodiode DA, DB et d'une capacité CA, CB peuvent être inversées, c'est-à-dire que la capacité CA, CB peut être reliée à un conducteur en ligne L1 à L3 et la photodiode DA, DB à un conducteur en colonne ;
- également, pour les cellules photosensibles JA, JB, il est aussi possible, quelles que soit les positions relatives des photodiodes DA, DB et des capacités CA, CB, d'inverser le sens de conduction des photodiodes DA, DB (bien entendu, dans ce cas la polarité des impulsions appliquées aux photodiodes est également inversée par rapport aux polarités représentées dans les demandes de brevet FR-A-2593319 et FR-A-2593343) et de connecter soit leurs anodes P, soit leurs cathodes N à la capacité CA, CB.

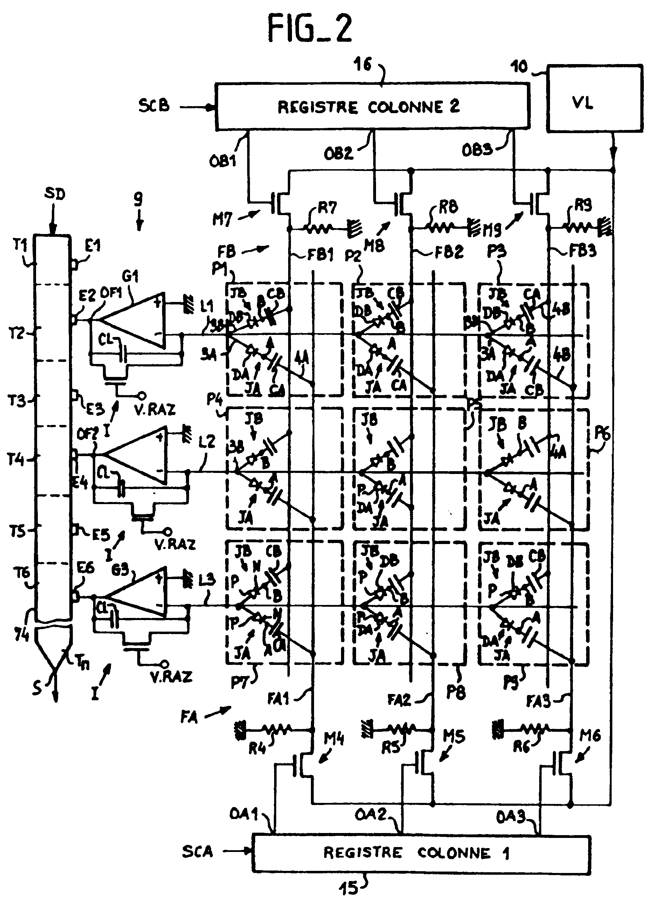

Ces différents agencements possibles des cellules photosensibles JA, JB ne modifient pas dans son principe le fonctionnement de ces dernières. Aussi il est possible de prévoir une organisation différente qui n'exige q'une unique série d'amplificateurs-intégrateurs ou amplificateurs de lecture ; le schéma d'une telle organisation étant représenté à la figure 2.

La figure 2 montre le schéma d' une seconde version du dispositif photosensible 1 de l'invention, dans laquelle au contraire de l'exemple représenté à la figure 1, les amplificateurs de lecture sont reliés aux conducteurs en ligne L1 à L3.

Les points photosensibles P1 à P9 et les deux cellules photosensibles JA, JB qu'ils comportent chacun sont organisés d'une même manière que dans la première version.

Chaque conducteur en ligne L1 à L3 et relié à l'entrée négative "-" d'un amplificateur-intégrateur G1 à G3. Chacun de ces amplificateurs- intégrateurs comporte, comme dans la version précédente, un condensateur d'intégration CL et interrupteur de remise à zéro I qui sont montés en parallèle, et qui sont reliés d'un côté à son entrée négative "-", et de l'autre côté à sa sortie OF1, OF2, OF3. Les interrupteurs de remise à zéro I sont constitués comme dans l'exemple précédent par des transistors MOS, commandés par des signaux de remise à zéro V.RAZ. La seconde entrée ou entrée positive "+" de chaque amplificateur G1 à G3 est reliée à la masse c'est-à-dire au potentiel de référence colonne VCO. Les sorties OF1, OF2, OF3, des amplificateurs-intégrateurs G1 à G3 sont reliées à un troisième dispositif de lecture et multiplexage ou registre d'acquisition de données analogiques 74, constitué par un registre à décalage du type par exemple comportant un nombre n d'étages d'acquisition T1, T2 ..., Tn à entrées parallèles E1, E2, ..., En et sortie S série.

Dans l'exemple non limitatif décrit, en vue d'éviter une superposition dans un même étage d'acquisition des signaux correspondant à ceux stockés au point A et au point B d'un même point photosensible P1 à P9, deux étages d'acquisition adjacents sont destinés à être chargés successivement par une même sortie OF1 à OF3 d'amplificateur G1 à G3. A cette fin, les sorties OF1 OF2, OF3 sont reliées par exemple respectivement aux seconde, quatrième et sixième entrées E2, E4, E6 du registre d'acquisition 74, de sorte à charger dans un premier temps les étages d'acquisition T2, T3, T4 par les charges ou informations contenues dans les premières cellules JA (des points photosensibles P1 à P9 reliés à un même conducteur en ligne L1 à L3) ; puis à charger dans un second temps les étages d'acquisition T1, T3, T5, par les informations contenues dans les secondes cellules JB, après avoir opéré un décalage des étages à l'aide d'un signal de commande de décalage SD appliqué au troisième registre d'acquisition 74.

Les conducteurs colonnes FA1 à FA3 et FB1 à FB3 sont tous reliés au générateur d'impulsions 10 par l'intermédiaire de transistors MOS M4 à M9, formant des interrupteurs de colonnes qui sont commandés par les sorties de deux registres à décalage 15, 16 dits registres colonnes. Le premier registre colonne 15 est commandé par un premier signal de commande colonne SCA permettant de rendre successivement active des sorties OA1, OA2, OA3 qui commandent respectivement les trois premiers interrupteurs de colonne M4, M5, M6. Les trois premiers interrupteurs de colonne M4, M5, M6 relient respectivement au générateur d'impulsions 10, les premier, second et troisième conducteurs colonnes FA1, FA2, FA3 du premier réseau colonne FA.

D'une même manière que pour le premier réseau de colonne FA, le second registre colonne 16 est commandé par un signal de colonne SCB permettant de rendre successivement actives les sorties OB1, OB2, OB3. Les sorties OB1, OB2, OB3 commandent respectivement les interrupteurs colonnes M7, M8, M9 qui relient respectivement les premier second et troisième conducteurs colonnne FB1, FB2, FB3 du second réseau colonne FB. Ainsi, toutes les secondes extrémités 4A des premières cellules photosensibles JA qui sont connectées à un même conducteur en colonne FA1 à FA3 du premier réseau colonne FA, sont reliées au générateur d'impulsion 10 quand ce conducteur de colonne est sélectionné à l'aide du premier registre colonne 15 ; et les secondes extrémités 4B des secondes cellules photosensibles JB connectées à un même conducteur en colonne FB1 à FB3 du second réseau colonne FB, sont reliées au générateur d'impulsion 10 quand ce conducteur colonne est sélectionné par le second registre colonne 16.

Dans cette seconde version de l'invention, mis à part le fait que le générateur d'impulsion 10 est maintenant relié aux secondes extrémités 4A, 4B des cellules photosensibles JA, JB par les conducteurs de colonne, le fonctionnement reste le même que dans l'exemple précédent, notamment pour la phase de polarisation en inverse, durant laquelle le générateur d'impulsion 10 envoie une impulsion sur tous les conducteurs de colonne FA1 à FA3 et FB1 à FB3, simultanément ou avec un décalage dans le temps.

Par contre après la phase d'éclairement des points photosensibles P1 à P9, le transfert dans le troisième registre d'acquisition 74 des informations stockées aux points A et B, est réalisé simultanément pour toutes les cellules photosensibles JA ou JB reliées à un même conducteur de colonne. Ainsi par exemple : en supposant que aucune des sorties OB1, OB2, OB3 du second registre colonne 16 ne soit active, et que seule soit active la première sortie OA1 du premier registre colonne 15, l'interrupteur colonne M4 est rendu passant et l'impulsion (non représentée) délivrée par le générateur d'impulsion 10 est appliquée au premier conducteur colonne FA1 du premier réseau colonne FA ; par suite, les informations contenues aux points A de tous les points photosensibles intéressés par ce conducteur colonne (c'est-à-dire les premier, quatrième et septième points photosensibles P1, P4, P7) sont chargées dans les amplificateurs-intégrateurs G1, G2, G3 et transférées dans le troisième registre d'acquisition 74. Un décalage des étages T1 à Tn du troisième regsitre d'acquisition 74 est ensuite opéré, en vue de permettre l'acquisition des informations contenues au point B des mêmes points photosensibles que précédemment, c'est-à-dire, les premier, quatrième et septième points photosensibles P1, P4, P7. A cette fin, la première sortie OA1 du premier registre colonne 15 est désactivée, et c'est la première sortie OB1 du second registre colonne 16 qui est rendue active : l'interrupteur M7 est alors rendu passant et l'impulsion délivrée par le générateur 10 est alors appliquée au premier conducteur colonne FB1 du second réseau colonne FB et par suite aux secondes cellules photosensibles JB reliées à ce conducteur colonne ; par suite, les informations stockées au point B des premiers, quatrième et septième points photosensibles P1, P4, P7 sont à leur tour chargées dans le troisième registre d'acquisition 74. Ce dernier est ensuite vidé de son contenu au profit de la mémoire principale précédemment mentionnée. Ensuite c'est uniquement la seconde sortie OA2 du premier registre colonne 15 qui est rendue active, pour faire l'acquisition des informations A stockées par toutes les premières cellules JA reliées au second conducteur colonne FB2 du second réseau colonne FB ; les opérations qui viennent d'être décrites étant répétées jusqu'à l'acquisition de toutes les informations A et B.

Les figures 3a et 3b, sont des coupes latérales selon deux directions orthogonales, qui montrent à titre d'exemple non limitatif et de manière schématique, une forme de réalisation préférée d'un détecteur d'images radiologiques à double énergie, comprenant un dispositif matriciel d'éléments photosensibles du type précédemment décrit en référence aux figures 1 ou 2.

Le détecteur d'image 25 comporte un support ou substrat 26, en verre par exemple. Une couche d'une substance scintillatrice 27 est déposée sur le substrat 26. Cette substance scintillatrice est choisie en fonction de sa sensibilité maximale dans une certaine gamme d'énergie du rayonnement X incident. Par exemple l'oxysulfure de gadolinium, dopé au terbium, est connu pour avoir une sensibilité optimale pour des rayons X dont l'énergie est de l'ordre de 50 KeV, et pour émettre en réponse une lumière verte de longueur d'onde O,54 microns. Ainsi par exemple, la couche scintillatrice 27 peut être constituée par une poudre d'oxysulfure de gadolinium noyée dans une résine thermo durcissable, de manière à constituer une feuille. Cette feuille est ensuite collée sur le substrat 26. La couche scintillatrice 27 a une épaisseur qui est choisie pour optimiser l'efficacité de production de photons, sans trop perdre sur la résolution ; cette épaisseur (non illustrée) peut aller de quelques dizaines à quelques centaines de microns pour les applications d'imageries radiologiques.

Une mince couche conductrice 28 de matériau conducteur, transparent ou partiellement transparent à la lumière émise par la couche scintillatrice 27, recouvre cette dernière, soit directement, soit par l'intermédiaire par exemple d'une couche isolante intermédiaire (non représentée) qui permet notamment de planariser la surface supérieure de la couche scintillatrice 27, et de constituer une barrière à une diffusion d'impuretés. La mince couche conductrice 28 peut être par exemple en oxyde d'indium-étain, et elle est gravée de sorte à constituer des conducteurs de colonne, par exemple les conducteurs de colonne FB1 à FB3 du second réseau colonne FB.

Au dessus de la couche conductrice 28, on trouve une couche isolante 34 destinée à former le diélectrique des secondes capacités CB. La couche isolante 34 qui forme le diélectrique est également transparente, et elle est constituée par exemple en nitrure de silicium.

La couche de diélectrique 34 est à son tour recouverte par un empilement de plusieurs couches 30, 31, 32 qui après gravure constituent les secondes photodiodes DB précédemment mentionnées. Dans l'exemple non limitatif décrit, les seconde photodiodes DB sont du type NIP, c'est-à-dire que sur la couche isolante 34 (destinée à former un diélectrique), on trouve d'abord la couche 30 de silicium amorphe hydrogéné, dopé avec une impureté de type N du phosphore par exemple. On trouve ensuite, au dessus de la couche 30 de silicium dopé N, la couche 31 en silicium amorphe hydrogéné intrinsèque. Ensuite est déposée sur la couche 31 de silicium intrinsèque, une couche de silicium amorphe hydrogéné 32, dopé avec une impureté de type P, du bore par exemple. Ces trois dernières couches 30, 31, 32 sont gravées selon un motif d'ilots de manière à constituer les secondes photodiodes DB; ces secondes photodiodes DB en forme d'îlot sont ainsi situées à chacun des points de croisement entre des conducteurs en colonne FA1 à FA3 et FB1 à FB3 et des conducteurs en ligne L1 à L3.

Au dessus de la dernière couche 32 de silicium dopé P, est déposée une nouvelle couche isolante 29, qui peut être constituée par exemple en un même matériau que la couche isolante 34 qui forme le diélectrique des secondes capacités CB. Des ouvertures sont réalisées dans cette dernière couche isolante 29, au dessus des secondes photodiodes DB, de sorte à mettre en contact ces dernières avec une couche en matériau conducteur appelée couche conductrice intermédiaire 51, et qui est gravée pour constituer les conducteurs en lignes L1 à L3.

Si la remise à niveau précédemment mentionnée des tensions aux bornes des photodiodes DA, DB se fait à l'aide d'impulsion électrique, la couche intermédiaire conductrice 51 peut être opaque, constituée par exemple par un dépôt de chrome ou de molybdène. Mais, si la remise à niveau se fait de façon optique, la couche intermédiaire conductrice 51 doit être transparente, en un même matériau par exemple que la couche conductrice 28 formant les conducteurs colonnes FB1 à FB3.

Au dessus des conducteurs en lignes L1 à L3, c'est-à-dire de la couche conductrice intermédiaire 51, on trouve un second empilement de trois couches 40, 41, 42 formant un dépôt PIN : ces trois couches successives 40, 41, 42 étant respectivement une couche de silicium amorphe hydrogéné dopé avec une impureté de type P, une couche de silicium amorphe hydrogné intrinsèque, une couche de silicium amorphe hydrogéné dopé avec une impureté de type N (du phosphore par exemple). Ces trois dernières couches 40, 41, 42 sont gravées selon un motif en îlot de sorte à constituer les premières photodiodes DA superposées aux secondes photodiodes DB.

Au dessus des premières photodiodes DA, est réalisé le dépôt d'une couche isolante 55 qui constitue la diélectrique des premières capacités CA.

On trouve ensuite au dessus de la couche diélectrique 55 des capacités CA, une couche conductrice supérieure 56, transparente, constituée par exemple en un même matériau conducteur que la couche 28 avec laquelle sont formés les conducteurs en colonne FB1 à FB3 appartenant au second réseau colonne FB. Cette couche conductrice supérieure 56 est gravée de sorte à constituer les conducteurs colonne FA1 à FA3 du premier réseau colonne FA.

Enfin, à l'opposé du substrat 26, une seconde couche d'une substance scintillatrice 58 termine la structure, et recouvre la couche conductrice supérieure 56 sur laquelle elle est collée ou pressée avec un lien (non représenté) transparent à la lumière.

La substance scintillatrice qui forme la seconde couche scintillatrice 58 est choisie en fonction de la gamme d'énergie du rayonnement X pour laquelle elle présente une sensibilité maximale, cette sensibilité maximale étant présentée bien entendu pour une gamme d'énergie du rayonnement X différent de celle de la première couche scintillatrice 27.

Ainsi par exemple dans le cas de la seconde couche scintillatrice 58, celle-ci peut être constituée par de l'oxyde d'yttrium de sorte à présenter une sensibilité optimale pour des rayons X de 20 Kev. L'oxyde d'yttrium de la seconde couche scintillatrice 58 pouvant être dopé par exemple au terbium.

Dans cette structure, on remarque que les points photosensibles du dispositif matriciel sont réalisés par des couches superposées, empilées dans le sens d'une épaisseur E de la structure, de sorte que pour un même point photosensible les deux cellules photosensibles JA, JB qui le constituent, et particulièrement les première et seconde photodiodes DA, DB sont parfaitement superposées. Ainsi pour chaque point photosensible l'encombrement latéral est minimum, de sorte que les photodiodes DA, DB peuvent avoir une surface détectrice aussi grande qu'il est possible. Cette structure est avantageuse en outre du fait que les première et seconde photodiodes DA, DB doivent être sensibles à des rayonnements (de lumière) d'origine différente, ce qui est obtenu en plaçant en sandwich entre les deux couches scintillatrices 27, 58 les différentes couches superposées qui constituent les première et seconde cellules photosensibles JA, JB.

En supposant que le rayonnement X (non représenté) arrive du côté de la couche scintillatrice 58 disposée à l'opposé du substrat 26, cette couche scintillatrice étant appelée dans la suite de la description première couche scintillatrice SA, compte tenu du sens de propagation du rayonnement X : le rayonnement traverse d'abord la première couche scintillatrice SA et les premières photodiodes DA, puis traverse ensuite les secondes photodiodes DB puis l'autre couche scintillatrice 27 appelée dans la suite de la description seconde couche scintillatrice SB.

Le premier scintillateur SA absorbe principalement des rayons X ayant une gamme d'énergie centrée autour de 20 KeV par exemple et il convertit les rayons X qu'il absorbe en un rayonnement détectable par le silicium amorphe. Le second scintillateur SB absorbe principalement des rayons X dont l'énergie correspond à sa sensibilité maximum qui se situe à des énergies (50 KeV par exemple) différentes que dans le cas du premier scintillateur SA, les rayons X absorbés étant également convertis en un rayonnement détectable par le silicium amorphe.

Les premières photodiodes DA situées à proximité du premier scintillateur SA captent préférentiellement la lumière émise par le premier scintillateur SA, et les secondes photodiodes DB situées à proximité du second scintillateur SB, captent préférentiellement la lumière émise par ce second scintillateur ; chaque photodiode constituant un écran entre l'autre photodiode à laquelle elle est superposée et le scintillateur près duquel elle est située.

Dans un matériau photosensible, le silicium amorphe par exemple, un rayonnement et notamment la lumière émise par les couches scintillatrices SA, SB est absorbée ou atténuée dans la matière photosensible de manière telle, que l'énergie cédée à cette matière décroît exponentiellement avec la longueur de matière traversée. Il en résulte que si les premières et les secondes photodiodes DA, DB ont des épaisseurs E1, E2 semblables, la lumière émise par la première couche scintillatrice SA est absorbée et donc détectée essentiellement par les premières photodiodes DA ; et que la lumière émise par la seconde couche scintillatrice SB est absorbée et détectée essentiellement par les secondes photodiodes DB. Il est à remarquer en outre que si les épaisseurs E1, E2 des photodiodes DA, DB sont suffisantes pour absorber totalement le rayonnement ou lumière émise par la couche scintillatrice qui est la plus proche, on obtient une séparation totale entre l'information fournie par la première couche scintillatrice SA et l'information fournie par la seconde couche scintillatrice SB, ces informations étant détectées respectivement par les première et seconde photodiodes DA et DB. Bien entendu une telle séparation n'est utile que si la couche conductrice intermédiaire 51 dans laquelle sont réalisés les conducteurs en ligne, est transparente. Dans ce cas, il est possible de réaliser, de manière simple, une remise à niveau (RAN) de type optique, qui peut être effectuée simultanément pour les deux photodiodes DA, DB d'un même point photosensible et éventuellement pour tous les points photosensibles, à partir d'une lumière émise par une unique source de lumière.

A cet effet, une source 60 de lumière, destinée à une remise à niveau générale, peut être plaquée contre le substrat 26, par exemple à l'opposé du second scintillateur SB. Cette source 60 de lumière peut être constituée par des moyens en eux mêmes connus, par exemple par une lumiplaque, ou par un réseau de diodes électroluminescentes, ou encore par des tubes à éclat, etc... .

Si la source de lumière 60 est appliquée sur le substrat 26, à l'opposé du second scintillateur SB, le substrat 26 doit lui-même alors être transparent. Un substrat classique en verre convient parfaitement. La source de lumière 60 peut alors être constituée par un réseau de diodes électroluminescentes (non représentées)monté de manière à former un panneau, comme dans l'exemple décrit dans une demande de brevet français FR-A-2598250.

Selon une autre caractéristique de l'invention, en vue de favoriser la remise à niveau générale à l'aide d'une unique source de lumière 60, cette dernière émet une lumière rouge, c'est-à-dire une lumière de longueur d'onde plus grande que la lumière émise par les scintillateurs SA, SB ; ceci tend à diminuer l'absorption de la lumière servant à la remise à niveau générale par rapport à l'absorption de la lumière émise par les scintillateurs SA, SB.

Mais, si la couche conductrice intermédiaire 51 qui constitue les conducteurs lignes situés entre les première et les seconde cellules photosensibles JA, JB, est opaque et ne laisse pas passer la lumière visible (ou proche du visible), c'est de préférence par impulsions électriques que seront effectuées les remises à niveau des photodiodes DA, DB.

Le mode de réalisation représenté aux figures 3a, 3b est donné à titre d'exemple nullement limitatif, et notamment les couches avec lesquelles sont constituées les première et seconde cellules photosensibles JA, JB peuvent être disposées dans des ordres différents, de sorte à constituer par exemple des photodiodes de type PIN ou NIP, ou de sorte à modifier les positions entre la photodiode et la capacité d'une même cellule photosensible. Il est à noter en outre que les éléments photosensibles DA, DB peuvent être constitués par des phototransistors du type NIPIN ou PINIP.

## Revendications

1. Détecteur d'images comportant une matrice de points photosensibles (P1 à P9), les points photosensibles étant reliés à des conducteurs en ligne (L1 à L3) et à des conducteurs en colonnes (FA1 à FA3, FB1 à FB3), chaque point photosensible comportant une première et une seconde cellules photosensibles (JA, JB) capables chacune de stocker une information, les deux cellules étant superposées, caractérisé en ce qu'il comporte deux couches scintillatrices (SA, SB) sensibles à des énergies différentes d'un rayonnement incident, et en ce que la matrice de points photosensibles est constituée par un empilement de couches situé entre les deux couches scintillatrices, le tout étant déposé sur une face d'un substrat.

2. Détecteur d'images selon la revendication 1, caractérisé en ce que les conducteurs en colonnes (FA1 à FA3, FB1 à FB3) sont partagés en deux réseaux (FA, FB), et en ce que la première et la seconde cellules photosensibles (JA, JB) d'un même point photosensible (P1 à P9) sont reliées par leur première extrémité (3A, 3B) à un même conducteur en ligne (L1 à L3) et sont reliées par leur seconde extrémité (4A, 4B) à un conducteur en colonne (FA1 à FA3, FB1 a FB3) d'un réseau colonne (FA, FB) différent.

3. Détecteur d'images selon l'une des revendications précédentes, caractérisé en ce que chaque cellule photosensible (JA, JB) est constituée par un élément photosensible (DA, DB) en série avec une capacité (CA, CB).

4. Détecteur d'images selon la revendication 3, caractérisé en ce que les éléments photosensibles (DA, DB) sont des photodiodes.

5. Détecteur d'images selon la revendication 3, caractérisé en ce que les éléments photosensibles (DA, DB) sont des phototransistors du type NIPIN ou PINIP.

6. Détecteur d'images selon l'une des revendications précédentes, caractérisé en ce que les conducteurs en lignes (LA1 à LA3) sont reliés a un dispositif d'adressage (8), et en ce que d'une part, les conducteurs colonnes (FA1 à FA3) du premier réseau colonne (FA) sont reliés a un premier dispositif de lecture et de multiplexage (9A), et en ce que d'autre part les conducteurs colonnes (FB1 à FB3) du second réseau colonne (FB) sont reliés à un second dispositif de lecture et de multiplexage (9B).

7. Détecteur d'images selon l'une des revendications 1 à 5, caractérisé en ce que les conducteurs en ligne (L1 à L3) sont reliés à un dispositif de lecture et de multiplexage (74), et en ce que le premier et le second réseaux (FA, FB) de conducteurs en colonne (FA1 à FA3, FB1 à FB3), sont reliés chacun à un dispositif d'adressage (8A, 8B).

8. Détecteur d'images selon l'une des revendications précédentes, caractérisé en ce que les première et seconde cellules photosensibles (JA, JB) sont portées par un substrat (26) et sont constituées chacune à partir d'un empilement de couches semi-conductrices (30, 31, 32, et 40, 41, 42) et d'une couche isolante (34, 55), toutes ces couches étant superposées l'une à l'autre entre deux couches conductrices (28, 58) dont l'une est gravée pour constituer les conducteurs colonnes (FB1 à FB3) du second réseau colonne (FB) et dont l'autre est gravée pour constituer les conducteurs colonnes (FA1 à FA3) du premier réseau colonne (FA), et en ce que les deux empilements ou cellules (JA, JB) sont séparés par une couche conductrice intermédiaire (51) avec laquelle sont réalisés les conducteurs en ligne (L1 à L3).

9. Détecteur d'images selon la revendication 8, caractérisé en ce que la couche conductrice intermédiaire (51) est transparente à la lumière.

10. Détecteur d'images selon la revendication 9, caractérisé en ce que les éléments photosensibles (DA, DB) ont des épaisseurs (E1, E2) sensiblement égales.

11. Détecteur d'images selon l'une des revendications 9 ou 10, caractérisé en ce qu'il comporte en outre une source de lumière (60) permettant d'effectuer une remise à niveau des tensions aux bornes des éléments photosensibles (DA, DB).

12. Détecteur d'images selon la revendication 8, caractérisé en ce que la couche conductrice intermédiaire (51) est opaque à la lumière.

13. Détecteur d'images selon la revendication 11, caractérisé en ce que la source de lumière (60) émet une lumière ayant une longueur d'onde plus grande que la lumière émise par les couches scintillatrices (SA, SB).

14. Détecteur d'images selon l'une des revendications précédentes, caractérisé en ce que le rayonnement incident est un rayonnement X.

## Claims

1. Image detector including a matrix of photosensitive points (P1 to P9), the photosensitive points being linked to conductors in a line (L1 to L3) and to conductors in columns (FA1 to FA3, FB1 to FB3), each photosensitive point including a first photosensitive cell and a second photosensitive cell (JA, JB) each capable of storing an item of information, the two cells being superimposed, characterised in that it includes two scintillator layers (SA, SB) sensitive to different energies of an incident radiation, and in that the matrix of photosensitive points is constituted from a stack of layers disposed between the two scintillator layers, the whole being deposited on one face of a substrate.

2. Image detector according to Claim 1, characterised in that the conductors in columns (FA1 to FA3, FB1 to FB3) are divided into two networks (FA, FB), and in that the first and second photosensitive cells (JA, JB) of the same photosensitive point (P1 to P9) are linked by their first end (3A, 3B) to the same conductor in a line (L1 to L3) and are linked by their second end (4A, 4B) to a conductor in a column (FA1 to FA3, FB1 to FB3) of a different column network (FA, FB).

3. Image detector according to one of the preceding claims, characterised in that each photosensitive cell (JA, JB) consists of a photosensitive element (DA, DB) in series with a capacitor (CA, CB).

4. Image detector according to Claim 3, characterised in that the photosensitive elements (DA, DB) are photodiodes.

5. Image detector according to Claim 3, characterised in that the photosensitive elements (DA, DB) are phototransistors of the nipin or pinip type.

6. Image detector according to one of the preceding claims, characterised in that the conductors in lines (LA1 to LA3) are linked to an addressing device (8), and in that on the one hand, the column conductors (FA1 to FA3) of the first column network (FA) are linked to a first reading and multiplexing device (9A), and in that on the other hand, the column conductors (FB1 to FB3) of the second column network (FB) are linked to a second reading and multiplexing device (9B).

7. Image detector according to one of Claims 1 to 5, characterised in that the conductors in a line (L1 to L3) are linked to a reading and multiplexing device (74), and in that the first and the second networks (FA, FB) of conductors in a column (FA1 to FA3, FB1 to FB3) are each linked to an addressing device (8A, 8B).

8. Image detector according to one of the preceding claims, characterised in that the first and second photosensitive cells (JA, JB) are carried by a substrate (26) and are each constituted from a stack of semiconducting layers (30, 31, 32 and 40, 41, 42) and from an insulating layer (34, 55), all these layers being superimposed on top of each other between two conducting layers (28, 58), one of which is etched in order to constitute the column conductors (FB1 to FB3) of the second column network (FB), and the other one of which is etched in order to constitute the column conductors (FA1 to FA3) of the first column network (FA), and in that the two stacks or cells (JA, JB) are separated by an intermediate conducting layer (51) with which the conductors in a line (L1 to L3) are produced.

9. Image detector according to Claim 8, characterised in that the intermediate conducting layer (51) is transparent to light.

10. Image detector according to Claim 9, characterised in that the photosensitive elements (DA, DB) have susbtantially equal thicknesses (E1, E2).

11. Image detector according to one of Claims 9 and 10, characterised in that it furthermore includes a light source (60) allowing level resetting of the voltages at the terminals of the photosensitive elements (DA, DB).

12. Image detector according to Claim 8, characterised in that the intermediate conducting layer (51) is opaque to light.

13. Image detector according to Claim 11, characterised in that the light source (60) emits light having a wavelength greater than the light emitted by the scintillator layers (SA, SB).

14. Image detector according to one of the preceding claims, characterised in that the incident radiation is X-radiation.

## Patentansprüche

1. Bilddetektor mit einer Matrix aus photoempfindlichen Punkten (P1 bis P9), welche photoempfindlichen Punkte mit Zeilenleitern (L1 bis L3) und Spaltenleitern (FA1 bis FA3, FB1 bis FB3) verbunden sind, wobei jeder photoempfindliche Punkt eine erste und eine zweite photoempfindliche Zelle (JA, JB) aufweist, von denen jede dazu in der Lage ist, Information zu speichern, wobei die zwei Zellen übereinander angeordnet sind, dadurch gekennzeichnet, daß er zwei szintillierende Schichten (SA, SB) aufweist, die für verschiedene Energien einfallender Strahlung empfindlich sind, und daß die Matrix aus photoempfindlichen Punkten aus einem Stapel von Schichten besteht, der zwischen den zwei szintillierenden Schichten angeordnet ist, wobei das Ganze auf eine Substratsfläche aufgebracht ist.

2. Bilddetektor nach Anspruch 1, dadurch gekennzeichnet, daß die Spaltenleiter (FA1 bis FA3, FB1 bis FB3) in zwei Gitter (FA, FB) unterteilt sind und daß die erste und die zweite photoempfindliche Zelle (JA, JB) eines jeweiligen photoempfindlichen Punktes (P1 bis P9) mit ihrem ersten Ende (3A, 3B) mit demselben einen Zeilenleiter (L1 bis L3) verbunden sind und mit ihrem zweiten Anschluß (4A, 4B) mit einem Spaltenleiter (FA1 bis FA3, FB1 bis FB3) eines anderen Spaltengitters (FA, FB) verbunden sind.

3. Bilddetektor nach einem der vorstehenden Ansprüche, dadurch gekennzeichnet, daß jede photoempfindliche Zelle (JA, JB) durch ein photoempfindliches Element (DA, DB) gebildet wird, das in Reihe mit einer Kapazität (CA, CB) liegt.

4. Bilddetektor nach Anspruch 3, dadurch gekennzeichnet, daß die photoempfindlichen Elemente (DA, DB) Photodioden sind.

5. Bilddetektor nach Anspruch 3, dadurch gekennzeichnet, daß die photoempfindlichen Elemente (DA, DB) Phototransistoren vom NIPIN- oder PINIP-Typ sind.

6. Bilddetektor nach einem der vorstehenden Ansprüche, dadurch gekennzeichnet, daß die Zeilenleiter (LA1 bis LA3) mit einer Adressiervorrichtung (8) verbunden sind und daß einerseits die Spaltenleiter (FA1 bis FA3) des ersten Spaltengitters (FA) mit einer ersten Vorrichtung für Lesen und Multiplexen (9A) verbunden sind und daß andererseits die Spaltenleiter (FB1 bis FB3) des zweiten Spaltengitters (FB) mit einer zweiten Vorrichtung zum Lesen und Multiplexen (9B) verbunden sind.

7. Bilddetektor nach einem der Ansprüche 1 bis 5, dadurch gekennzeichnet, daß die Zeilenleiter (L1 bis L3) mit einer Vorrichtung zum Lesen und Multiplexen (74) verbunden sind und daß das erste und das zweite Gitter (FA, FB) der Spaltenleiter (FA1 bis FA3, FB1 bis FB3) jeweils mit einer Adressiervorrichtung verbunden sind (8A, 8B).

8. Bilddetektor nach einem der vorstehenden Ansprüche, dadurch gekennzeichnet, daß die ersten und die zweiten photoempfindlichen Zellen (JA, JB) von einem Substrat (26) getragen werden und jeweils ausgehend von einem Stapel halbleitender Schichten (30, 31, 32 und 40, 41, 42) und einer isolierenden Schicht (34, 55) gebildet werden, wobei all diese Schichten zwischen zwei leitenden Schichten (28, 58) übereinander angeordnet sind, von denen die eine so geätzt ist, daß sie Spaltenleiter (FB1 bis FB3) des zweiten Spaltengitters (FB) bildet, und die andere so geätzt ist, daß sie Spaltenleiter (FA1 bis FA3) des ersten Spaltengitters (FA) bildet, und daß die zwei Stapel oder Zellen (JA, JB) durch eine leitende Zwischenschicht (51) voneinander getrennt werden, mit der die Zeilenleiter (L1 bis L3) realisiert sind.

9. Bilddetektor nach Anspruch 8, dadurch gekennzeichnet, daß die leitende Zwischenschicht (51) lichtdurchlässig ist.

10. Bilddetektor nach Anspruch 9, dadurch gekennzeichnet, daß die photoempfindlichen Elemente (DA, DB) im wesentlichen gleiche Dicken (E1, E2) aufweisen.

11. Bilddetektor nach einem der Ansprüche 9 oder 10, dadurch gekennzeichnet, daß er ferner eine Lichtquelle (60) aufweist, die es erlaubt, eine Pegelrückstellung an den Anschlüssen der photoempfindlichen Elemente (DA, DB) vorzunehmen.

12. Bildetektor nach Anspruch 8, dadurch gekennzeichnet, daß die leitende Zwischenschicht (51) lichtundurchlässig ist.

13. Bilddetektor nach Anspruch 11, dadurch gekennzeichnet, daß die Lichtquelle (60) Licht einer Wellenlänge aufweist, die größer ist als diejenige des von den szintillierenden Schichten (SA, SB) emittierten Lichts.

14. Bilddetektor nach einem der vorstehenden Ansprüche, dadurch gekennzeichnet, daß die auftreffende Strahlung Röntgenstrahlung ist.
